**Europäisches Patentamt**

**European Patent Office**

**Office européen des brevets**

(19)

(11) Veröffentlichungsnummer: **0 291 648**
**B1**

(12) ## EUROPÄISCHE PATENTSCHRIFT

(45) Veröffentlichungstag der Patentschrift:
**22.11.90**

(21) Anmeldenummer: **88103445.8**

(22) Anmeldetag: **05.03.88**

(51) Int. Cl.⁵: **B01J 8/44,** B65D 88/70,
B05B 1/34, B65D 88/72

(54) **Vorrichtung zum Fluidisieren von Schüttgütern, insbesondere von fein- und grobkörnigen Schüttgütern in Mischung.**

(30) Priorität: **22.05.87 DE 3717216**

(43) Veröffentlichungstag der Anmeldung:
**23.11.88 Patentblatt 88/47**

(45) · Bekanntmachung des Hinweises auf die Patenterteilung:
**22.11.90 Patentblatt 90/47**

(84) Benannte Vertragsstaaten:
**BE ES FR GB GR IT NL SE**

(56) Entgegenhaltungen:
**WO-A-83/00681**
**DE-A- 3 204 065**
**DE-B- 1 211 107**
**DE-B- 1 211 545**
**DE-B- 1 257 682**
**FR-A- 2 473 481**

(73) Patentinhaber: **VSR Engineering GmbH Fördertechnik,**
**Hingbergstrasse 319, D-4330 Mülheim/Ruhr(DE)**

(72) Erfinder: **Rappen, Albert, Karlsruhrer Strasse 87,**
**D-4330 Mühlheim/Ruhr(DE)**
Erfinder: **Böhner, Wolfgang, Tannenstrasse 19,**
**D-4006 Erkrath 2(DE)**

(74) Vertreter: **Honke, Manfred, Dr. et al, Patentanwälte**
**Andrejewski, Honke & Partner**
**Theaterplatz 3 Postfach 10 02 54, D-4300 Essen 1(DE)**

## Beschreibung

Die Erfindung betrifft eine Vorrichtung zum Fluidisieren von Schüttgütern, insbesondere von fein- und grobkörnigen Schüttgütern in Mischung, und Abreinigen von staubförmigen Ablagerungen durch kontinuierliches oder diskontinuierliches bzw. stoßweises Ausblasen von Luft od. dgl. Gas.

Zum Fluidisieren von inhomogenen Schüttgütern, nämlich von fein- und grobkörnigen Schüttgütern in Mischung, ist ein in einen Speicherbehälter hineinragendes Luftzufuhr- und -verteilungselement bekannt, welches einem unten offenen Rohr entspricht. Das Luftzufuhr- und -verteilungselement ist an seinem einen Ende mit einem Luftstoßgerät verbunden, während sein anderes Ende frei beweglich ist und dadurch bei Zufuhr von Druckluft seitlich und/oder nach oben ausschlagen kann. Die expandierende Druckluft soll eine Doppelfunktion ausüben, nämlich einerseits das feinkörnige bzw. staubförmige Schüttgut fluidisieren und andererseits aus dem lediglich einseitig über ein Rohrstück mit dem Boden des Speicherbehälters verbundenen Luftzufuhr- und -verteilungselement ein schlagendes Druckluftwerkzeug machen, dessen Ausschlagweite durch einen Bügel begrenzt wird (vgl. DE-OS 3 424 875). Eine derartige Austragshilfe für schwerfließende Schüttgüter muß stets mit dem Boden des Speicherbehälters verbunden werden, wobei der Boden eben sein muß. Hinzu kommt, daß die Fluidisierungs- und Schlageffekte über die Ausblaslänge abnehmen, weil das Luftzufuhr- und -verteilungselement einen konstanten Querschnitt aufweist. Folglich nimmt besonders die Tiefenwirkung stark ab. Ferner kann sich Schüttgut unter den Bügel bzw. die Ausblaskanten setzen, so daß die angestrebten Effekte nicht eintreten.

Der Erfindung liegt die Aufgabe zugrunde, eine Vorrichtung zum Fluidisieren von Schüttgütern, insbesondere von fein- und grobkörnigen Schüttgütern in Mischung, und Abreinigen von staubförmigen Ablagerungen der eingangs beschriebenen Art zu schaffen, die sich durch eine in ausbildungs- und einsatztechnischer Hinsicht besonders einfache Bauweise und hohe Funktionstüchtigkeit auszeichnet.

Zur Lösung dieser Aufgabe ist die gattungsgemäße Vorrichtung gekennzeichnet durch eine Schwertdüse mit einem sich über ihre Ausblaslänge um mindestens 1/3 verjüngenden Düsenquerschnitt und über die Ausblaslänge verteilten Ausblasöffnungen, deren Gesamtfläche in etwa der Abnahme des Düsenquerschnitts entspricht. Vorzugsweise verjüngt sich der Düsenquerschnitt über die Ausblaslänge bis unter 10% des Ausgangsquerschnittes. - Die Erfindung geht zunächst einmal von der Erkenntnis aus, daß selbst inhomogenes Schüttgut unterschiedlicher Körnung einwandfrei fluidisiert werden kann, ohne daß dazu das Schüttgut mechanisch bewegt bzw. mit einem ausschlagenden Werkzeug behandelt werden muß. Das gilt insbesondere dann, wenn die Ausblaseffekte über die Ausblaslänge erhalten bleiben, so daß konstante Tiefenwirkung gewährleistet ist. Dazu verjüngt sich bei der erfindungsgemäßen Schwertdüse der Düsenquerschnitt und ist ferner dafür Sorge getragen, daß die Gesamtfläche der Ausblasöffnungen der flächenmäßigen Abnahme des Düsenquerschnitts entspricht. Jedenfalls ist mit der erfindungsgemäßen Schwertdüse ein einwandfreies Fluidisieren selbst von feinkörnigen und grobkörnigen Schüttgütern in Mischung gewährleistet, obwohl die Schwertdüse nicht die Funktion eines schlagenden Druckluftwerkzeuges erfüllt und folglich auch nicht mit dem Untergrund des betreffenden Speicherbehälters verbunden werden muß. Dadurch wird der Einsatz der erfindungsgemäßen Schwertdüse erleichtert. Außerdem sind einfacher und funktionsgerechter Aufbau gewährleistet.

Weitere erfindungswesentliche Merkmale sind im folgenden aufgeführt. So lehrt die Erfindung, daß die Ausblasöffnungen durch Ausblasschlitze im Bereich der maximalen Breite des Ausblasquerschnittes gebildet sind. Diese Ausblasschlitze sorgen dafür, daß die Druckluft über eine mehrfach tiefere als breite Ausblaslänge aus der Schwertdüse austritt. Die Ausblasschlitze können durch seitliche Keilausschnitte im Düsenschwert gebildet sein, wobei die beiden Schwerthälften mittels die zugeordneten Ausblaskanten verbindender Stege oder Schraubverbindungen zusammengehalten sind. Die Stege können als Materialstege, Stifte, Schweißnähte usw. in vorgegebenen Abständen unter Bildung des gewünschten Spaltabstandes bzw. Spaltmaßes angeordnet sein. Die Schraubverbindungen ermöglichen ein Gegeneinanderstellen der Schwerthälften und folglich eine Einstellung des Spaltmaßes für die Ausblasschlitze. - Nach einer anderen Ausführungsform der Erfindung ist das Düsenschwert von zwei dachförmig abgekanteten Schwerthälften gebildet und weist einen rautenartigen Querschnitt auf. Es besteht aber auch die Möglichkeit, daß das Düsenschwert von zwei Halbrohren gebildet ist und die untere Rohrhälfte einen geringeren Radius als die obere Rohrhälfte aufweist. Nach einer weiteren abgewandelten Ausführungsform der Erfindung ist vorgesehen, daß das Düsenschwert eine obere dachförmig abgekantete Schwerthälfte oder ein Halbrohr als obere Schwerthälfte und eine konisch abgekantete Wanne als untere Schwerthälfte aufweist, wobei die obere Schwerthälfte die untere Schwerthälfte übergreift. In diesem Fall entsteht eine kippfeste Auflagefläche für das Düsenschwert bzw. die Schwertdüse. Stets werden die Ausblasschlitze zwischen der oberen Schwerthälfte und der unteren Schwerthälfte gebildet. Zweckmäßigerweise weisen die Ausblasschlitze elastische Dichtlippen an den Schlitzkanten auf, welche die Ausblasschlitze verschließen und sich lediglich bei Druckluftbeaufschlagung auf den jeweils gewünschten Spaltquerschnitt öffnen.

Nach einer abgewandelten Ausführungsform der Erfindung mit selbständiger Bedeutung ist vorgesehen, daß die untere Schwerthälfte von einem flachen langgestreckten Basisteil, z.B. Blechteil, mit konisch zulaufenden Seitenkanten und die obere Schwerthälfte von einem flexiblen Gewebe oder einer elastischen Gummi- bzw. Kunststoffmatte gebildet ist, deren Kanten durch einen umlaufenden Rahmen gehalten sind, wobei der Rahmen auf an dem Basisteil verankerten Führungsstiften bei Druckluftbeaufschlagung um ein vorgegebenes Spaltmaß von dem Basisteil abhebt. Bei dieser Ausführungsform ist zusätzlich eine mechanische Bewegung des Schüttgutes gewährleistet. Dabei kann das Gewebe als poröses Gewebe ausgebildet sein. Mechanische Schüttgutbewegung kann auch dann erreicht werden, wenn das Düsenschwert im Anschlußbereich an ein Blasrohr mit dem Untergrund elastisch verbunden ist, z.B. mittels Auflager bildender Gummielemente bzw. Gummi/Metallelemente. Endlich besteht nach einer anderen Variante der Erfindung die Möglichkeit, daß die Schwertdüse als konischer flexibler oder sich elastisch aufweitender Schlauch ausgebildet ist und der Schlauch gewebeartige feinporige Ausblasöffnungen oder über die Ausblaslänge verteilte Ausblaslöcher aufweist. Sofern mit einem feinporigen bzw. porösen Gewebe gearbeitet wird, trägt die durch das Gewebe austretende Druckluft zur Fluidisierung des Schüttgutes bei.

Im folgenden wird die Erfindung anhand einer lediglich ein Ausführungsbeispiel darstellenden Zeichnung näher erläutert; es zeigen:

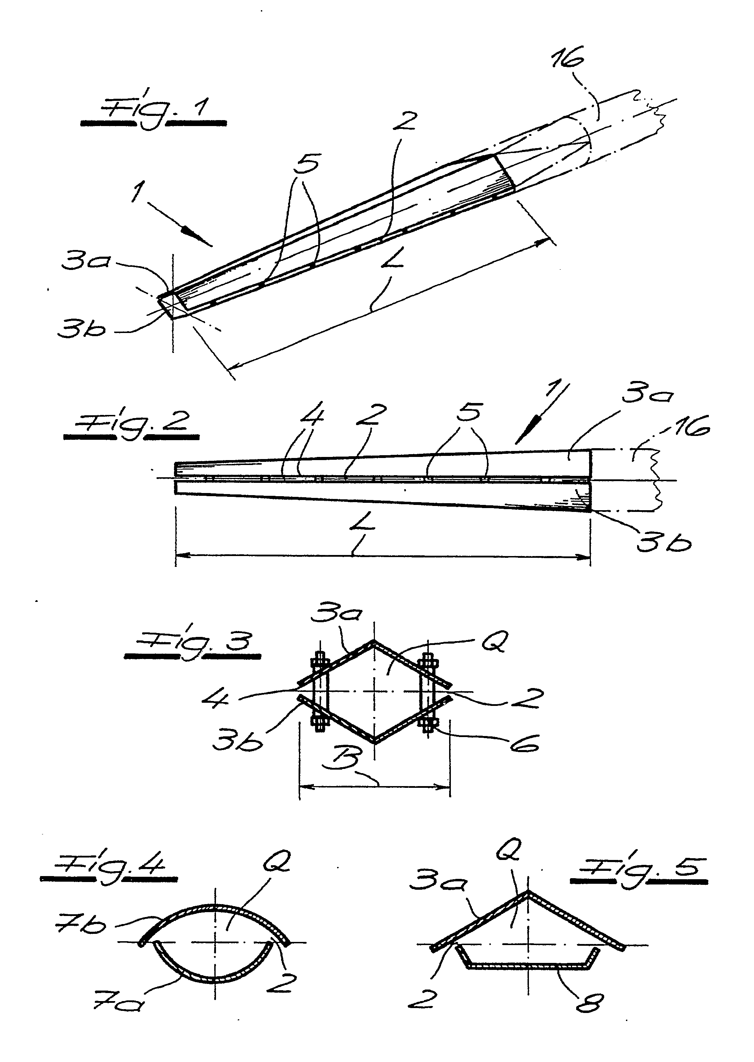

Fig. 1 eine erfindungsgemäße Schwertdüse in perspektivischer Darstellung,

Fig. 2 das Düsenschwert des Gegenstandes nach Fig. 1 in Seitenansicht,

Fig. 3 einen Querschnitt durch den Gegenstand nach Fig. 2 mit Schraubverbindungen,

Fig. 4 eine abgewandelte Ausführungsform des Gegenstandes nach Fig. 2,

Fig. 5 eine weitere abgewandelte Ausführungsform des Gegenstandes nach Fig. 2,

Fig. 6 ausschnittsweise den Gegenstand nach Fig. 3 mit Dichtlippen,

Fig. 7 ausschnittsweise den Gegenstand nach Fig. 5 mit einer Dichtlippe,

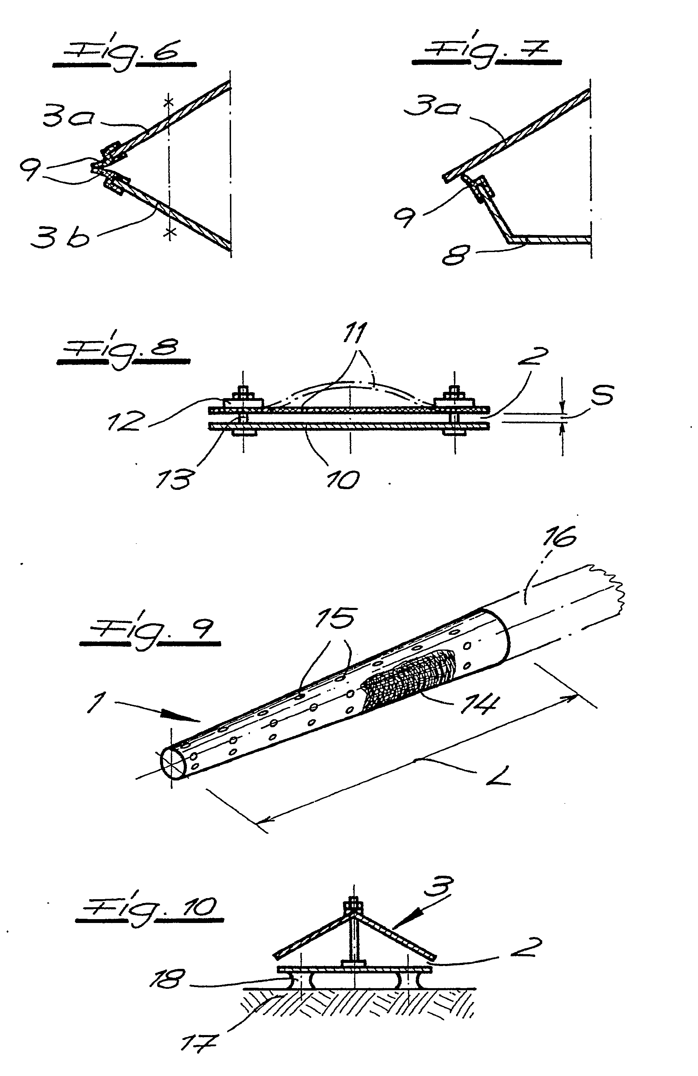

Fig. 8 eine abgewandelte Ausführungsform des Gegenstandes nach Fig. 1,

Fig. 9 eine weitere abgewandelte Ausführungsform des Gegenstandes nach Fig. 1 und

Fig. 10 ein Auflager für den Gegenstand nach Fig. 1 im Anschlußbereich an ein Blasrohr.

In den Figuren ist eine Vorrichtung zum Fluidisieren von Schüttgütern, insbesondere von fein- und grobkörnigen Schüttgütern in Mischung, und Abreinigen von staubförmigen Ablagerungen durch kontinuierliches oder diskontinuierliches bzw. stoßweises Ausblasen von Luft od. dgl. Gas dargestellt. Bei dieser Vorrichtung handelt es sich um eine Schwertdüse 1 mit einem sich über ihre Ausblaslänge L um mindestens 1/3 verjüngenden Düsenquerschnitt Q und über die Ausblaslänge L verteilten Ausblasöffnungen 2, deren Gesamtfläche in etwa der Abnahme des Düsenquerschnitts Q entspricht. Der Düsenquerschnitt Q verjüngt sich über die Ausblaslänge bis unter 10% des Ausgangsquerschnittes. Die Ausblasöffnungen sind durch Ausblasschlitze 2 im Bereich der maximalen Breite B des Ausblasquerschnitts gebildet. Die Ausblasschlitze 2 können durch seitliche Keilausschnitte im Düsenschwert 3 gebildet sein. Die beiden Schwerthälften 3a, 3b sind entweder mittels die zugeordneten Ausblaskanten 4 verbindender Stege 5 oder mittels Schraubverbindungen 6 zusammengehalten. Das Düsenschwert 3 ist von dachförmig abgekanteten Schwerthälften 3a, 3b gebildet und weist einen rautenartigen Querschnitt auf.

Nach einer abgewandelten Ausführungsform ist das Düsenschwert 3 von zwei Halbrohren gebildet, wobei die untere Rohrhälfte 7a einen geringeren Radius als die obere Rohrhälfte 7b aufweist. Nach einer anderen Ausführungsform weist das Düsenschwert 3 eine obere dachförmig abgekantete Schwerthälfte 3a und eine konisch abgekantete Wanne 8 als untere Schwerthälfte auf, wobei die obere Schwerthälfte 3a die untere Schwerthälfte bzw. Wanne 8 übergreift. Stets können die Ausblasschlitze 2 elastische Dichtlippen 9 an den Schlitzkanten aufweisen.

Nach einem abgewandelten Ausführungsbeispiel ist vorgesehen, daß die untere Schwerthälfte von einem flachen langgestreckten Basisteil 10, z.B. Blechteil, mit konisch zulaufenden Seitenkanten und die obere Schwerthälfte von einem flexiblen Gewebe 11 oder einer elastischen Gummi- bzw. Kunststoffmatte gebildet ist, deren Kanten durch einen umlaufenden Rahmen 12 gehalten sind. Der Rahmen 12 ist auf an dem Basisteil 10 verankerten Führungsstiften 13 geführt und hebt bei Druckluftbeaufschlagung um ein vorgegebenes Spaltmaß S von dem Basisteil 10 ab. Das Gewebe 11 ist als poröses Gewebe ausgebildet und folglich luftdurchlässig.

Die Schwertdüse 1 kann aber auch als konischer flexibler oder sich elastisch aufweitender Schlauch ausgebildet sein, wobei der Schlauch gewebeartige feinporige Ausblasöffnungen 14 und/oder über die Ausblaslänge L verteilte Ausblaslöcher 15 aufweist.

Stets besteht die Möglichkeit, daß das Düsenschwert 3 im Anschlußbereich an ein Blasrohr 16 mit dem Untergrund 17 elastisch verbunden ist, z.B. mittels Auflager 18 bildender Gummielemente bzw. Gummi/Metallelemente.

**Patentansprüche**

1. Vorrichtung zum Fluidisieren von Schüttgütern, insbesondere von fein- und grobkörnigen Schüttgütern in Mischung, und Abreinigen von staubförmigen Ablagerungen durch kontinuierliches oder diskontinuierliches Ausblasen von Luft oder dgl. Gas mittels eines Luftausblaselementes mit über seine Ausblaslänge verteilten Ausblasöffnungen und sich verjüngendem Querschnitt, dadurch gekennzeichnet, daß das Luftausblaselement als schwertförmige Düse (1) mit einem sich über ihre Ausblaslänge (L) um mindestens ein Drittel verjüngenden Düsenquerschnitt (Q) ausgebildet ist, wobei die Gesamtfläche der Ausblasöffnungen (2) in etwa der Abnahme der Düsenquerschnittsfläche (Q) entspricht.

2. Vorrichtung nach Anspruch 1, dadurch gekennzeichnet, daß sich der Düsenquerschnitt (Q) über die Ausblaslänge (L) bis unter 10% des Ausgangsquerschnittes verjüngt.

3. Vorrichtung nach Anspruch 1 oder 2, dadurch gekennzeichnet, daß die Ausblasöffnungen durch Ausblasschlitze (2) im Bereich der maximalen Breite (B) des Ausblasquerschnitts gebildet sind.

4. Vorrichtung nach einem der Ansprüche 1 bis 3, dadurch gekennzeichnet, daß die Ausblasschlitze (2) durch seitliche Keilausschnitte im Düsenschwert (3) gebildet sind und die beiden Schwerthälften (3a, 3b) mittels die zugeordneten Ausblaskanten (4) verbindender Stege (5) oder Schraubverbindungen (6) zusammengehalten sind.

5. Vorrichtung nach einem der Ansprüche 1 bis 4, dadurch gekennzeichnet, daß das Düsenschwert (3) von zwei dachförmig abgekanteten Schwerthälften (3a, 3b) gebildet ist und einen rautenartigen Querschnitt aufweist.

6. Vorrichtung nach einem der Ansprüche 1 bis 4, dadurch gekennzeichnet, daß das Düsenschwert (3) von zwei Halbrohren gebildet ist und die untere Rohrhälfte (7a) einen geringeren Radius als die obere Rohrhälfte (7b) aufweist.

7. Vorrichtung nach einem der Ansprüche 1 bis 4, dadurch gekennzeichnet, daß das Düsenschwert (3) eine obere dachförmig abgekantete Schwerthälfte (3a) oder ein Halbrohr als obere Schwerthälfte und eine konisch abgekantete Wanne (8) als untere Schwerthälfte aufweist, wobei die obere Schwerthälfte die untere Schwerthälfte übergreift.

8. Vorrichtung nach einem der Ansprüche 1 bis 7, dadurch gekennzeichnet, daß die Ausblasschlitze (2) elastische Dichtlippen (9) an den Schlitzkanten aufweisen.

9. Vorrichtung nach einem der Ansprüche 1 bis 3, dadurch gekennzeichnet, daß die untere Schwerthälfte von einem flachen Basisteil (10), z. B. Blechteil, mit konisch zulaufenden Seitenkanten und die obere Schwerthälfte von einem flexiblen Gewebe (11) oder einer elastischen Gummi- bzw. Kunststoffmatte gebildet ist, deren Kanten durch einen umlaufenden Rahmen (12) gehalten sind, wobei der Rahmen (12) auf an dem Basisteil (10) verankerten Führungsstiften (13) bei Druckluftbeaufschlagung um ein vorgegebenes Spaltmaß (S) von dem Basisteil (10) abhebt.

10. Vorrichtung nach einem der Ansprüche 1 bis 9, dadurch gekennzeichnet, daß das Gewebe (11) als poröses Gewebe ausgebildet ist.

11. Vorrichtung nach einem der Ansprüche 1 bis 10, dadurch gekennzeichnet, daß das Düsenschwert (3) im Anschlußbereich an ein Blasrohr (16) mit dem Untergrund (17) elastisch verbunden ist, z.B. mittels Auflager (18) bildender Gummielemente bzw. Gummi/Metallelemente.

12. Vorrichtung nach einem der Ansprüche 1 bis 11, dadurch gekennzeichnet, daß die Schwertdüse (1) als konischer flexibler oder sich elastisch aufweitender Schlauch ausgebildet ist und der Schlauch gewebeartige feinporige Ausblasöffnungen (14) oder über die Ausblaslänge (L) verteilte Ausblaslöcher (15) aufweist.

**Claims**

1. An appliance for the fluidization of loose material, particularly of mixtures of fine-grained and coarse-grained loose material, and freeing them from deposits of dust, by continuous or discontinuous blasts of air or similar gas by means of an airblast unit with airblast openings distributed along its blowing length and with a tapering cross-section, characterized in that the airblast unit is constructed as a swordlike blast pipe (1) with blast pipe section (Q) tapering by at least one-third along its blowing length (L), in which the total areas of the airblast openings (2) approximately correspond to the reduction of area of the blast pipe section (Q).

2. An appliance according to claim 1, characterized that the blast pipe section (Q) tapers along the blowing length (L) until it is less than 10% of the initial section.

3. An appliance according to claim 1 or 2, characterized in that the airblast openings are formed by airblast slots (2) in the region of maximum width (B) of the airblast section.

4. An appliance according to one of claims 1 to 3, characterized in that the airblast slots (2) are formed by lateral wedge-shaped openings in the blast pipe sword (3) and the two sword halves (3a, 3b) are held together by the web (5) or bolt (6) connections of the associated airblast edges (4).

5. An appliance according to one of claims 1 to 4, characterized in that the blast pipe sword (3) is formed by two roof-like folded sword halves (3a, 3b) and has a diamond-like cross-section.

6. An appliance according to one of claims 1 to 4, characterized in that the blast pipe sword (3) is formed by two semi-tubes and the lower semi-tube (7a) has a smaller radius than the upper semi-tube (7b).

7. An appliance according to one of claims 1 to 4, characterized in that the blast pipe sword (3) has an upper roof-like folded sword half (3a) or a semi-tube as the upper sword half and a bevel-folded trough (8) as the lower sword half, the upper sword half projecting over the lower sword half.

8. An appliance according to one of claims 1 to 7, characterized in that the airblast slots (2) have elastic sealing lips (9) at the edges of the slots.

9. An appliance according to one of claims 1 to 3, characterized in that the lower sword half is formed by a flat base piece (10) e.g. a piece of sheet with converging side edges and the upper sword half is formed by a flexible woven material (11) or an elastic rubber or plastics mat the edges of which are held by a surrounding frame (12), in which when compressed air is admitted the frame (12) lifts away by a specified gap distance (S) from the base piece (10) on guide pins (13) anchored thereto.

10. An appliance according to one of claims 1 to 9, characterized in that the woven material (11) is formed as a porous woven material.

11. An appliance according to one of claims 1 to 10, characterized in that in the neighbourhood of its connection to an airblast pipe (16) the blast pipe sword (3) is elastically connected to the foundation (17) e.g. by means of rubber or rubber/metal units forming supports (18).

12. An appliance according to one of claims 1 to 11, characterized in that the sword-like blast pipe (1) is formed as a conical flexible or elastically-expanding hose, and the hose possesses weave-like finely porous airblast openings (14) or airblast holes (15) distributed along its blowing length (L).

**Revendications**

1. Dispositif pour fluidiser des matières en vrac, notamment des matières formées de grains fins et de grains grossiers en mélange, et éliminer des dépôts sous forme de poussière au moyen d'un soufflage continu ou discontinu d'air ou d'un gaz analogue à l'aide d'un élément de soufflage d'air possédant des ouvertures de soufflage réparties sur sa longueur de soufflage et une section transversale qui se rétrécit, caractérisé en ce que l'élément de soufflage d'air est réalisé sous la forme d'une buse (1) en forme d'épée possédant une section transversale (Q) qui se rétrécit d'au moins un tiers sur la longueur de soufflage (L) de la buse, la surface totale des ouvertures de soufflage (2) correspondant approximativement à la diminution de la surface en coupe transversale (Q) de la buse.

2. Dispositif selon la revendication 1, caractérisé en ce que la section transversale (Q) de la buse se rétrécit, sur la longueur de soufflage (L), jusqu'à tomber à moins de 10% de la section transversale initiale.

3. Dispositif selon la revendication 1 ou 2, caractérisé en ce que les ouvertures de soufflage sont formées par des fentes de soufflage (2) situées au niveau de la largeur maximale (B) de la section transversale de soufflage.

4. Dispositif selon l'une quelconque des revendications 1 à 3, caractérisé en ce que les fentes de soufflage (2) sont formées par des découpes latérales en coin dans le profil en forme d'épée (3) de la buse et que les deux moitiés (3a, 3b) du profil en forme d'épée sont maintenues assemblées au moyen de barrettes (5) ou de liaisons vissées (2), qui relient les barrettes associées de soufflage (4).

5. Dispositif selon l'une quelconque des revendications 1 à 4, caractérisé en ce que le profil en forme d'épée (3) de la buse est formé par deux moitiés (3a, 3b) disposées obliquement en forme de toit et possède une section transversale en forme de losange.

6. Dispositif selon l'une quelconque des revendications 1 à 4, caractérisé en ce que le profil en forme d'épée (3) de la buse est formé de deux moitiés de tube et que la moitié de tube inférieure (7a) possède un rayon inférieur à la moitié de tube supérieure (7b).

7. Dispositif selon l'une quelconque des revendications 1 à 4, caractérisé en ce que le profil en forme d'épée (3) de la buse possède une moitié supérieure (3a) possédant un profil en forme de toit ou une moitié supérieure formée d'une moitié de tube, et une cuvette (8) à bord incliné avec une forme conique en tant que moitié inférieure, la moitié supérieure du profil en forme d'épée s'engageant pardessus la moitié inférieure de ce profil.

8. Dispositif selon l'une quelconque des revendications 1 à 7, caractérisé en ce que les fentes de soufflage (2) comportent des lèvres élastiques d'étanchéité (9) au niveau de leurs bords.

9. Dispositif selon l'une quelconque des revendications 1 à 3, caractérisé en ce que la moitié inférieure du profil en forme d'épée est formée par une partie de base plane (10), par exemple une pièce en tôle, possédant des bords latéraux qui convergent avec une forme conique, et que la moitié supérieure du profil en forme d'épée est formée par un tissu flexible (11) ou par une nappe élastique formée de caoutchouc ou de matière plastique, dont les bords sont maintenus par un cadre périphérique (12), le cadre (12) placé sur des tiges de guidage (13) ancrées dans la partie de base (10) s'écartant de cette dernière sur une largeur de fente prédéterminée (S), lors de l'application d'une charge d'air comprimé.

10. Dispositif suivant l'une quelconque des revendications 1 à 9, caractérisé par le fait que le tissu (11) est réalisé sous la forme d'un tissu poreux.

11. Dispositif selon l'une quelconque des revendications 1 à 10, caractérisé en ce que le profil en forme d'épée (3) de la buse est relié élastiquement, dans sa zone de raccordement à un tube de soufflage (16), au soubassement (17), par exemple à l'aide d'éléments en caoutchouc ou d'éléments en caoutchouc/métal constituant des supports (18).

12. Dispositif selon l'une quelconque des revendications 1 à 11, caractérisé en ce que la buse en forme d'épée (1) est réalisée sous la forme d'un tuyau conique flexible s'élargissant élastiquement et en ce que le tuyau comporte de fines ouvertures de soufflage (14), à la manière d'un tissu, ou des trous de soufflage (15) répartis sur la longueur de soufflage (L).

Fig. 1

Fig. 2

Fig. 3

Fig. 4

Fig. 5

*Fig.6*

3a
9
3b

*Fig.7*

3a
9
8

*Fig.8*

11
12
13
10
2
S

*Fig.9*

16
15
1
14
L

*Fig.10*

16
3
2
18
17